# EUROPEAN PATENT SPECIFICATION

(11) **EP 3 396 142 B1**
(45) Date of publication and mention of the grant of the patent: **02.12.2020**
(21) Application number: 17167736.2
(22) Date of filing: 24.04.2017
(51) Int. Cl.: F02B 37/00, F02B 37/02, F02B 67/10, F02F 7/00, F02M 55/00, F02M 55/02

(54) **COVER FOR FUEL PIPE ASSEMBLY**
ABDECKUNG FÜR KRAFTSTOFFROHRANORDNUNG
COUVERCLE POUR ENSEMBLE DE TUYAU DE CARBURANT

(43) Date of publication of application: 31.10.2018
(73) Proprietor: Caterpillar Motoren GmbH & Co. KG, 24159 Kiel (DE)
(72) Inventor: Ehlert, Ole, 24214 Tuettendorf (DE); Gravert, Torben, 24214 Gettorf (DE); Paeselt, Roland, 24161 Altenholz (DE)
(74) Representative: BRP Renaud & Partner mbB Rechtsanwälte Patentanwälte Steuerberater

(56) References cited:
- EP-A2- 0 748 934
- EP-A2- 2 236 897
- WO-A1-2010/131213
- FR-A1- 2 538 076
- GB-A- 1 263 198
- US-A1- 2015 129 076

## Description

### Technical Field

The present disclosure generally relates to a fuel pipe assembly of an engine. More particularly, the present disclosure relates to a cover for the fuel pipe assembly of the engine.

### Background

Power producing units like internal combustion engines include one or more cylinders. The cylinders have a combustion chamber configured to receive fuel/air-fuel mixture i.e. charge. The charge is delivered to the cylinder(s) by a fuel delivery system. The fuel delivery system may utilize a common rail, also known as a fuel rail or common rail, to distribute fuel to fuel injectors. The fuel rail may include single or multiple pipes from which fuel is supplied to multiple injectors and subsequently to the cylinder of the internal combustion engine. Such fuel delivery systems, however, are susceptible to leakage from the fuel rail or elsewhere in the fuel delivery system.

European patent application number 0748934 (hereinafter referred to as EP0748934) relates to a pipe assembly for a vehicle. EP0748934 discloses two separate fuel pipes and a fire retardant covering. The fire retardant covering covers the pipes and joins the pipes by forming a web of fire retardant material which extends between the two covered pipes.

### Summary of the Invention

In another aspect of the present disclosure, an engine is disclosed. The engine includes a fuel injection system configured to inject fuel into a plurality of combustion chambers. The fuel injection system includes a first fuel injection unit and a second fuel injection unit. The engine further comprising a fuel pipe assembly having at least one fuel pipe fluidly coupled to the first fuel injection unit and the second fuel injection unit and a cover assembly. The cover assembly is disposed over the fuel pipe assembly having a U-shaped first structure having a first edge and second edge extending along a length of the first structure configured to be placed on the fuel pipe assembly and extending along a portion of a length of the fuel pipe assembly, the first structure configured to partially encapsulate the fuel pipe assembly; and a second structure, extending along the portion of the length of the fuel pipe assembly and configured to be coupled to the first structure such that the first structure and the second structure encapsulate the portion of the length of the fuel pipe assembly, characterized in that the first structure includes a plurality of rotary latches provided on the first edge and the second edge.

### Brief Description of the Drawings

**FIG. 1** is a diagrammatic illustration of an exemplary engine in accordance with an embodiment of the present disclosure;
**FIG. 2** is a schematic of the engine in accordance with an embodiment of the present disclosure;
**FIG. 3** illustrates a portion of a fuel injection system in accordance with an embodiment of the present disclosure;
**FIG. 4** a portion of a fuel injection system wherein a first structure is coupled to a second structure to cover a fuel pipe assembly;
**FIG. 5** illustrates the first structure and the second structure of a cover assembly; and
**FIG. 6** illustrates the first structure coupled to the second structure to form a shape similar to that of a flange of a fuel injection unit.

### Detailed Description

Reference will now be made in detail to embodiments of the disclosure, examples of which are illustrated in the accompanying drawings. Wherever possible, the same reference numbers will be used throughout the drawings to refer to the same or like parts.

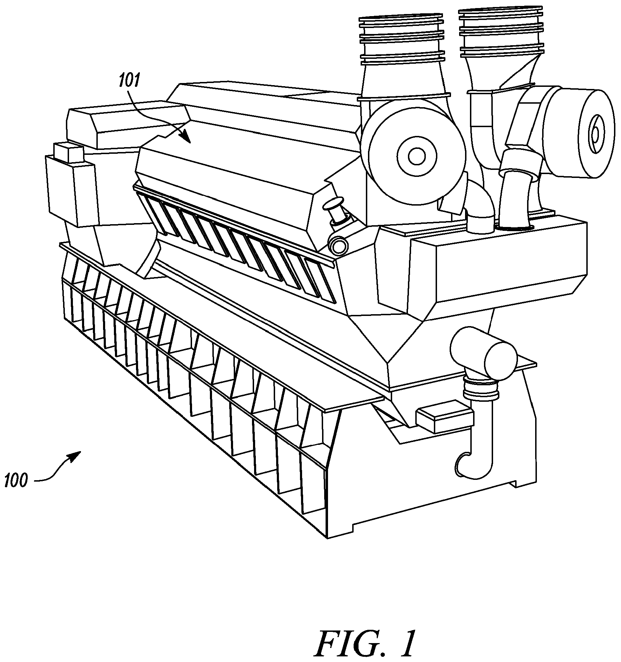

**FIG. 1** illustrates an exemplary engine **100** configured to produce power. In the exemplary embodiment, the engine **100** is an internal combustion engine, preferably an engine configured to power a marine vehicle. However, it may be contemplated that in various other embodiments, the engine **100** may be any engine running on solid, liquid or gaseous fuel, used for various purposes such as a power generation, a marine vessel, an automobile, a construction machine, any transportation vehicle and the like.

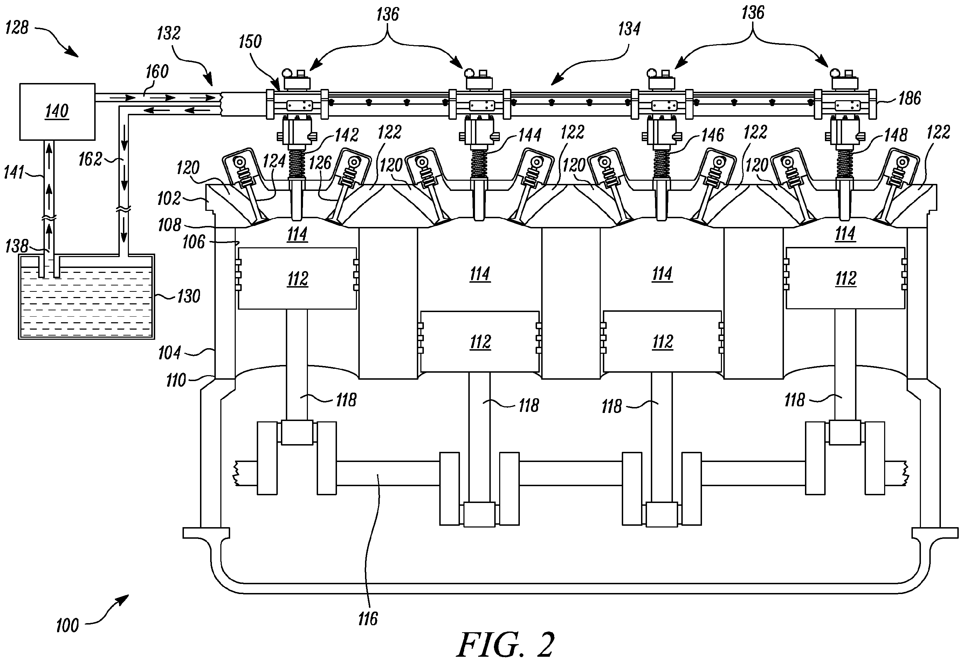

The engine **100** includes an outer cover **101** configured to shroud the engine **100** such that various engine components lie/are disposed under the outer cover **101.** **FIG. 2** illustrates the schematic of the engine **100** under the outer cover **101.** The engine **100** includes a cylinder head **102** and a cylinder block **104.** The cylinder block **104** defines a plurality of bores **106** extending from a first end **108** of the cylinder block **104** to a second end **110** of the cylinder block **104.**

The cylinder head **102,** the plurality of bores **106** in the cylinder block **104** and a plurality of pistons **112** define a plurality of combustion chambers **114.** The plurality of combustion chambers **114** are configured to receive air and/or fuel mixture i.e. charge. The plurality of pistons **112** are configured to reciprocate within the plurality of bores **106** between a top dead center (the uppermost position in the bores **106** where the piston **112** reaches) and a bottom dead center (the lowermost position where the piston **112** reaches), during engine operation. The plurality of pistons **112** may be pivotably coupled to connecting rods **118.** The plurality of pistons **112** slide or reciprocate within the plurality of bores **106.** The reciprocating movement of the plurality of pistons **112** causes a crankshaft **116,** assembled within a crankcase (not shown), to rotate.

The plurality of pistons **112** include piston heads that may receive and/or may be exposed to combustion gases (i.e. the gases generated on burning of charge) generated within the combustion chamber **114.** The combustion gases moves the plurality of pistons **112** and transmits the driving force created by the burning charge to the crankshaft **116.**

Referring to **FIG. 2****,** the cylinder head **102** may define one or more valve openings for receiving a valve. The valve openings may be in fluid communication with an intake port **120** and an exhaust port **122** of each combustion chamber of the plurality of combustion chamber **114,** as shown in **FIG. 1****.** An intake valve **124** and an exhaust valve **126** may be disposed at least partially in the valve openings disposed in the cylinder head **102.**

The exhaust valve **126** may be configured to be opened by an exhaust cam (not shown) to facilitate discharge of the combustion products from the combustion chamber **114.** The intake valve **124** may be configured to be opened by an intake cam (not shown) to supply charge/air into the combustion chamber **114.**

The charge may be introduced into the combustion chamber **114** by a fuel injection system **128** provided in the engine **100.** The fuel injection system **128** includes a fuel tank **130,** a fuel pipe assembly **132,** a cover assembly **134,** a plurality of fuel injection units **136** and a master pump **140.**

The fuel tank **130** includes an outlet **138.** The outlet **138** is coupled to the master pump **140** via a fuel line **141.** The master pump **140** is coupled to the plurality of fuel injection units **136** via the fuel pipe assembly **132.** The master pump **140** is configured to supply pressurized fuel from the fuel tank **130** to the plurality of fuel injection units **136.** The plurality of fuel injection units **136** are configured to directly inject one or more fuel charges into the plurality of combustion chambers **114.** For example, the plurality of fuel injection units **136** include a plurality of fuel injectors configured to inject a sequence of one or more fuel jets into the combustion chamber **114.** In the embodiment illustrated, the fuel injection system **128** is a direct injection system. However, in an alternate embodiment, the fuel injection system **128** may be a common rail coupled to at least a fuel pump configured to inject pressurized fuel the combustion chamber **114** via fuel intake valves. In yet another embodiment, the fuel injection system **128** may be a fuel introducing system configured to introduce fuel into the plurality of combustion chambers **114** via conduits/ports/valves. In various other embodiments, it may be contemplated that the fuel injection system **128** may be any fuel injection system known in the art.

The fuel injection system **128** will now be explained in detail with reference to **FIG. 2****.** The plurality of fuel injection units **136** include a first fuel injection unit **142,** a second fuel injection unit **144,** a third fuel injection unit **146** and a fourth fuel injection unit **148.** Each of the first fuel injection unit **142,** second fuel injection unit **144,** third fuel injection unit **146** and fourth fuel injection unit **148** is configured to inject a sequence of one or more fuel jets into the combustion chambers **114.** In the embodiment illustrated, the first fuel injection unit **142,** second fuel injection unit **144,** third fuel injection unit **146** and fourth fuel injection unit **148** are fuel injectors. In an alternate embodiment, each of the first fuel injection unit **142,** second fuel injection unit **144,** third fuel injection unit **146** and fourth fuel injection unit **148** may include a fuel injection pump and a valve to inject fuel jets into the combustion chamber **114.** In yet another embodiment, the plurality of fuel injection units **136** may include a common fuel rail having a pressurized fuel and a fuel inlet valve configured to inject fuel into the combustion chamber **114.**

Although, in the embodiment illustrated in **FIG. 2****,** the fuel injection system **128** includes four fuel injection units (as **FIG. 2** illustrates a four cylinder engine) it may be contemplated that the engine **100** may have varying number of cylinders and accordingly may have more/less than four fuel injection units.

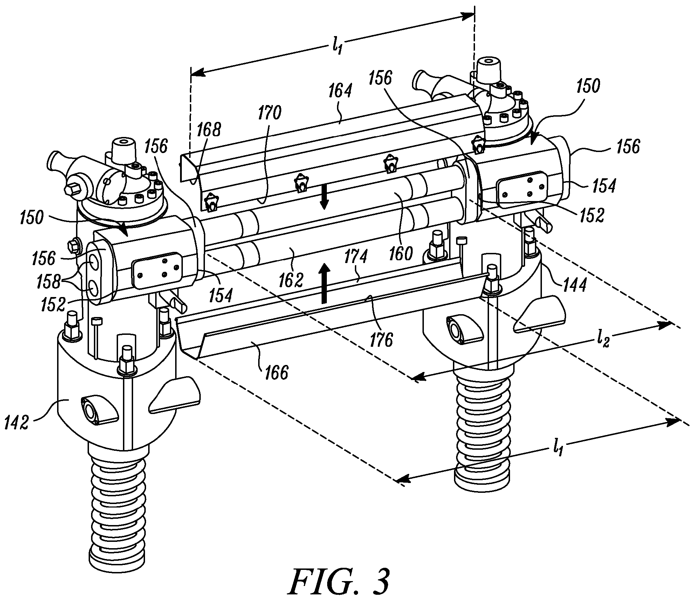

Each of the first fuel injection unit **142,** second fuel injection unit **144,** third fuel injection unit **146** and fourth fuel injection unit **148** includes a coupling assembly **150,** as illustrated in **FIG. 2****.** Referring to **FIG. 3****,** the coupling assembly **150** has an inlet end **152** and an outlet end **154.** Both the inlet end **152** and the outlet end **154** include a flange **156.** Within the flange **156** openings **158** are provided. These openings **158** are configured to receive at least one pipe of the fuel pipe assembly **132.**

Referring to **FIG. 2** and **FIG. 3****,** the fuel pipe assembly **132** includes a first pipe **160** and a second pipe **162.** The first pipe **160** is coupled to the master pump **140** at one end is received within one of the openings **158** provided on the first fuel injection unit **142** and second fuel injection unit **144** (as illustrated in **FIG. 3****).** It may be contemplated that third fuel injection unit **146** and fourth fuel injection unit **148** may be similar to the first fuel injection unit **142** and the second fuel injection unit **144.** Accordingly, the first pipe **160** may also be received within openings provided on the third fuel injection unit **146** and fourth fuel injection unit **148.**

The second pipe **162** of the fuel pipe assembly **132** may be coupled to the fuel tank **130** at one of its end. Further, the second pipe **162** is received within one of the openings **158** provided on the first fuel injection unit **142** and second fuel injection unit **144** (as illustrated in **FIG.** 3). As discussed above, it may be contemplated that third fuel injection unit **146** and fourth fuel injection unit **148** may be similar to the first fuel injection unit **142** and the second fuel injection unit **144.** Accordingly, the second pipe **162** may also be received within openings provided on the third fuel injection unit **146** and fourth fuel injection unit **148.** Both the first pipe **160** and the second pipe **162** may be blocked by a plug **186** proximal to the fourth fuel injection unit **148.**

In the embodiment illustrated, the first pipe **160** and the second pipe **162** are tubular pipes passing through the plurality of fuel injection units **136.** However, it may be contemplated that the first pipe **160** and the second pipe **162** may be composed of a plurality of pipes (smaller sized pipes). For example, the first pipe **160** may be composed of four small sized pipes. One pipe may be coupling the master pump **140** to the first fuel injection unit **142,** another pipe may be coupling the first fuel injection unit **142** to the second fuel injection unit **144,** yet another pipe may be coupling the second fuel injection unit **144** to the third fuel injection unit **146** and a final fourth pipe may be coupling the third fuel injection unit **146** to the fourth fuel injection unit **148.** In a similar manner, the second pipe **162** may also be made up of a plurality of pipes.

Referring **FIG. 2****,** the first pipe **160** is configured to supply pressurized fuel from the master pump **140** to the first fuel injection unit **142,** second fuel injection unit **144,** third fuel injection unit **146** and fourth fuel injection unit **148.** Each of the first fuel injection unit **142,** second fuel injection unit **144,** third fuel injection unit **146,** fourth fuel injection unit **148** includes a tip that is in fluid communication with the combustion chamber **114.** Using this tip, the first fuel injection unit **142,** second fuel injection unit **144,** third fuel injection unit **146,** fourth fuel injection unit **148** inject fuel/charge from the first pipe **160** into the plurality of combustion chambers **114.**

There may exist instances when the first pipe **160** may supply excess fuel (more than required by the plurality of fuel injection units **136)** to one or more of the first fuel injection unit **142,** second fuel injection unit **144,** third fuel injection unit **146** and fourth fuel injection unit **148.** In such cases, the additional/excess fuel is returned, by one or more of the first fuel injection unit **142,** second fuel injection unit **144,** third fuel injection unit **146** and fourth fuel injection unit **148,** into the fuel tank **130** via the second pipe **162.**

As discussed above, the second pipe **162** is blocked by the plug **186** at one end and coupled to the fuel tank **130** at the other end. Such a configuration redirects the additional/excess fuel from the second pipe **162** to the fuel tank **130.** Thus, such a setup enables the additional/excess fuel to be recycled for latter use.

As illustrated in **FIG. 2****,** the first pipe **160** and the second pipe **162** of the fuel pipe assembly **132** disposed between the plurality of fuel injection units **136** are covered by the cover assembly **134.** The cover assembly **134** includes a first structure **164** and a second structure **166.** The first structure **164** extends along a portion of a length of the fuel pipe assembly **132.** For example, the first structure **164** may be of length **'l₁'.** This first structure **164** of length **'l₁'** is placed over a length of the first pipe **160** and/or the second pipe **162** present between the first fuel injection unit **142** and the second fuel injection unit **144** i.e. length **'l₂'** such that it partially encapsulates a portion of the length of the fuel pipe assembly **132** (i.e. the first pipe **160** and/or the second pipe **162).** For example, as illustrated in **FIG. 3****,** the first structure **164** is configured to partially encapsulate an upper portion of the fuel pipe assembly **132.**

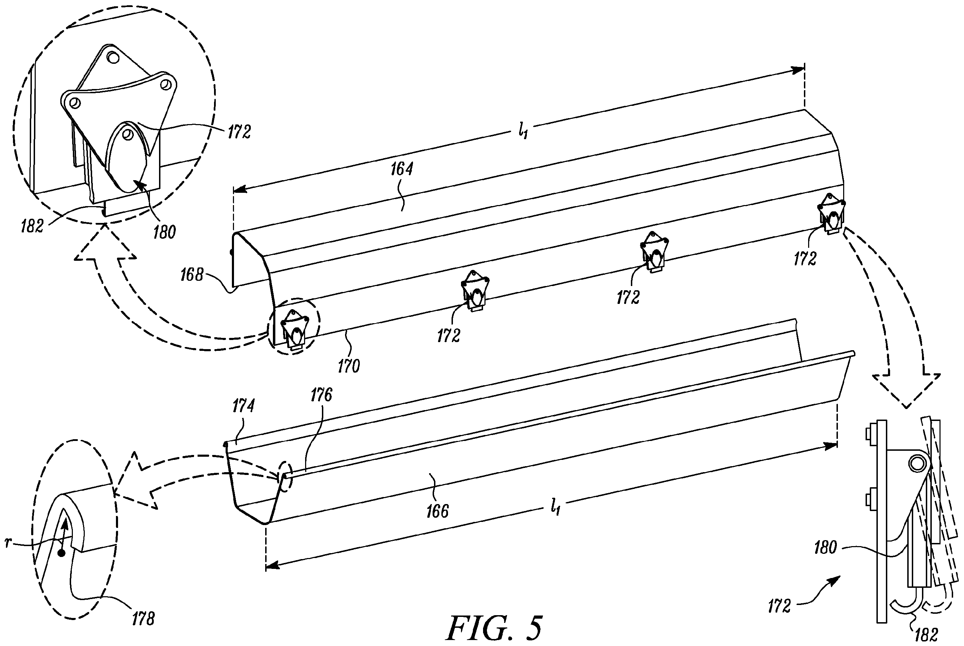

Referring to **FIG. 3** and **FIG. 5****,** the first structure **164** is a U shaped (bent shaped/curved) structure having a first edge **168** and a second edge **170.** The U shaped first structure **164** may be made up of a sheet metal. The sheet metal may be any one of carbon steel, cast iron 302 and 304, stainless steel 316, stainless steel, bronze, 416 stainless steel, etc. The U shaped first structure **164** may also be made up of plastic materials. For example, the first structure **164** may be made of plastic that is resistant to corrosion from the fuel being used in the engine **100.**

The first edge **168** and the second edge **170** of the first structure **164** extend along a length of the first structure **164** i.e. the length **'l₁'.** A plurality of rotary latches **172** are provided proximal to/on the first edge **168** and the second edge **170** of the first structure **164.** The plurality of rotary latches **172** may be uniformly spaced apart from each other along a length of the first edge **168** and the second edge **170.** Each of the latch of the plurality of latches **172** includes a clamping plate **180** that is a movable (pivotable) plate, as illustrated in **FIG. 5****.** The clamping plate **180** has a hook structure **182** configured to engage with the second structure **166** and couple the first structure **164** with the second structure **166.**

Referring to **FIG. 3** and **FIG. 5****,** the second structure **166** of the cover assembly **134** also extends along the portion of the length of the fuel pipe assembly **132** i.e. the second structure **166** also extends for the length **'l₁'.** The second structure **166** is also a U shaped structure having a third edge **174** and a fourth edge **176.** The third edge **174** and the fourth edge **176** extend along a length of the second structure (i.e. extends for the length **'l₁').** The third edge **174** and the fourth edge **176** are bent to form an arcuate/bent profile **178** having a radius **'r'.** The second structure **166** may also be made up of a sheet metal wherein the sheet metal may be any one of carbon steel, cast iron 302 and 304, stainless steel 316, stainless steel, bronze, 416 stainless steel, etc. The U shaped second structure **166** may also be made up of plastic materials. For example, the second structure **166** may be made of plastic that is resistant to corrosion from the fuel being used in the engine **100.**

Referring to **FIG. 3****,** the second structure **166** of length **'l₁'** is also placed on the fuel pipe assembly **132** i.e. over the length of the first pipe **160** and/or the second pipe **162** present between the first fuel injection unit **142** and the second fuel injection unit **144.** The second structure **166** is also configured to partially encapsulate the fuel pipe assembly **132.** For example, as illustrated in **FIG. 3****,** the second structure **166** is configured to partially encapsulate a lower portion of the fuel pipe assembly **132.**

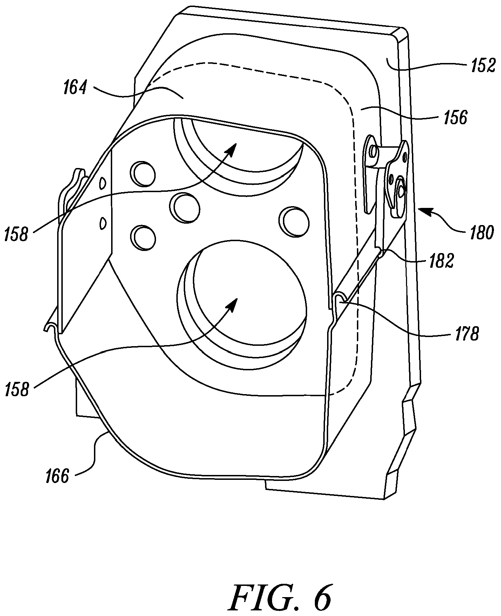

The coupling of the components of the cover assembly **134** will now be explained in detail with reference to **FIG. 2-6****.** As discussed above, the first structure **164** is placed over the upper portion of the fuel pipe assembly **132** and the second structure **166** is placed such that it partially encapsulates the lower portion of the fuel pipe assembly **132.**

Referring to **FIG. 3****,** the first structure **164** and the second structure **166** are placed such that the first edge **168** of the first structure **164** aligns with the third edge **174** of the second structure **166** and the second edge **170** of the first structure **164** aligns with the fourth edge **176** of the second structure **166.** The first structure **164** is then coupled to the second structure **166** by engaging the hook structure **182** of the plurality of rotary latches **172** provided on the first structure **164** with the arcuate profile **178** of the second structure **166.** Such coupling of the first structure **164** and the second structure **166** fully encapsulates the first pipe **160** and the second pipe **162** present between the first fuel injection unit **142** and the second fuel injection unit **144** (i.e. encapsulates the portion of the length **'l₁'** of the fuel pipe assembly **132).**

Again referring to **FIG. 3****,** when the clamping plate **180** of the plurality of rotary latches **172** provided on the first structure **164** are received in the arcuate profile **178** of the second structure **166,** the combination of the first structure **164** and the second structure **166** take the shape similar to that of the flange **156** of the plurality of fuel injection units **136.** Further, since the length **'l₁'** of the coupled assembly of the first structure **164** to the second structure **166** is greater than the length **'l₂'** (length of the first pipe **160** and/or the second pipe **162** present between the first fuel injection unit **142** and the second fuel injection unit **144),** the excess length of the coupled assembly of the first structure **164** and the second structure **166** i.e. difference of length **'l₁'** and **'l₂'** of the first structure **164** and the second structure **166** force fits on to the flange **156** of the one or more of the plurality of fuel injection units **136.**

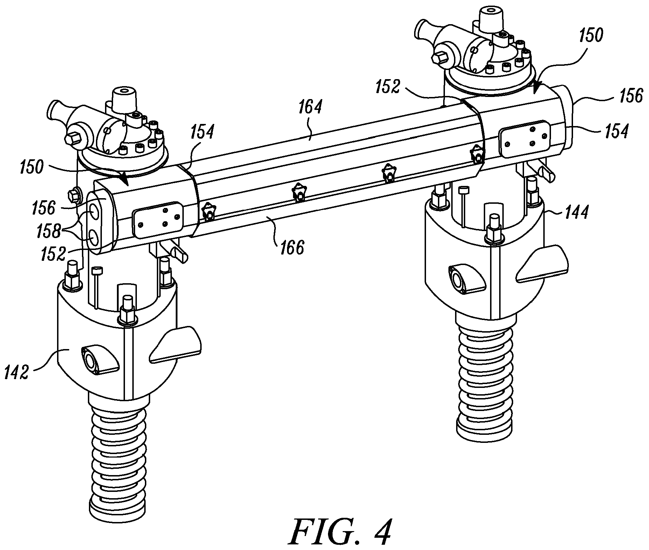

For example, referring to **FIG. 3****,** **FIG. 4** and **FIG. 6****,** the first fuel injection unit **142** has the flange **156** (on the outlet end **154)** and the second fuel injection unit **144** also has the flange **156** (on the inlet end **152).** When the first structure **164** and the second structure **166** are coupled to each other the coupled assembly of the first structure **164** and the second structure **166** form a shape similar to the flange **156** at both ends of the cover assembly **134.** Further, since the length **'l₁'** of the coupled assembly of the first structure **164** to the second structure **166** is greater than the length **'l₂'** the excess length of the coupled assembly of the first structure **164** and the second structure **166** fits over the flange **156** of the first fuel injection unit **142** and the flange **156** of the second fuel injection unit **144,** as illustrated in **FIG.** 3 and **FIG. 4****.** In the embodiment illustrated, flanges provided on the each of the first fuel injection unit **142,** second fuel injection unit **144,** third fuel injection unit **146** and fourth fuel injection unit **148** are identical to each other. However, it may be contemplated that the each of the fuel injector of the plurality of fuel injection units **136** may have a unique flange shape. In such a case, the first structure **164** and the second structure **166** may take shapes corresponding to the flanges of the fuel injector units, when coupled to each other.

### Industrial Applicability

Internal combustion engines include cylinder(s) (having a combustion chamber) configured to receive fuel/air-fuel mixture i.e. charge. The charge is delivered to the cylinder(s) by a fuel rail that may include single or multiple pipes from which fuel is supplied to multiple injectors and subsequently to the cylinder of the internal combustion engine.

In an aspect of the present disclosure, the cover assembly **134** is provided for the fuel pipe assembly **132** of the engine **100,** as illustrated in **FIG. 2** and **FIG. 4****.** The cover assembly **134** includes the first structure **164** configured to be placed on the fuel pipe assembly **132** and extending along a portion of the length **('l₁')** of the fuel pipe assembly **132,** the first structure **164** configured to partially encapsulate the portion of length **('l₁')** of the fuel pipe assembly **132.** The cover assembly **134** further includes the second structure **166** configured to extend along the portion of the length of the fuel pipe assembly **132** and configured to be coupled to the first structure **164** such that the first structure **164** and the second structure **166** encapsulate the portion of the length of the fuel pipe assembly **132.**

Referring to **FIG. 3****,** **FIG. 4** and **FIG. 6****,** coupling the plurality of rotary latches **172** with the arcuate profile **178** force-fits the cover assembly **134** on to the flange **156** (proximal to outlet end **154) of** the first fuel injection unit **142** and the flange **156** (proximal to inlet end **152)** of the second fuel injection unit **144.** Such a configuration i.e. the coupled combination of the first structure **164** and the second structure **166** and the coupling assembly **150** of the first fuel injection unit **142** and the second fuel injection unit **144** encapsulates the first pipe **160** and the second pipe **162** present between the first fuel injection unit **142** and the second fuel injection unit **144.** Thus, any leakage in the first pipe **160** and/or the second pipe **162** can be contained within the cover assembly **134.** This prevents leakage of oil/fuel from the first pipe **160** and/or the second pipe **162** and prevents spillage of oil/fuel on any component of the engine **100.** Further, in case fuel/oil gets accumulated within the cover assembly **134.** The clamping plate **180** may be moved to decouple the first structure **164** and the second structure **166.** The fuel accumulated in the second structure **166** and/or the first structure **164** can be removed/drained. The first structure **164** and second structure **166** may then be cleaned and may again be coupled to each other to encapsulate the first pipe **160** and the second pipe **162.** Thus, the same components may be used for a long period of time to prevent oil/fuel from spilling from the fuel pipe assembly **132** onto the high temperature components of the engine **100.** The cover assembly **134** of the present disclosure may also be suitable for being mounted to the fuel pipe assembly **132** without disassembling the fuel pipe assembly **132.**

While aspects of the present disclosure have seen particularly shown and described with reference to the embodiments above, it will be understood by those skilled in the art that various additional embodiments may be contemplated by the modification of the disclosed machines, systems and methods without departing from the appended claims.

## Claims

1. An engine (100) having a fuel injection system (128) configured to inject fuel into a plurality of combustion chambers (114), wherein the fuel injection system (128) comprising a first fuel injection unit (142) and a second fuel injection unit (144), the engine (100) comprising:
a fuel pipe assembly (132) having at least one fuel pipe (160) fluidly coupled to the first fuel injection unit (142) and the second fuel injection unit (144); and
a cover assembly (134) comprising:
a U-shaped first structure (164) having a first edge (168) and a second edge (170) extending along a length of the first structure (164) configured to be placed on the fuel pipe assembly (132) and extending along a portion of a length of the fuel pipe assembly (132), the first structure (164) configured to partially encapsulate the portion of the length of the fuel pipe assembly (132); and
a second structure (166), extending along the portion of the length of the fuel pipe assembly (132) and configured to be coupled to the first structure (164) such that the first structure (164) and the second structure (166) encapsulate the portion of the length of the fuel pipe assembly (132),
**characterized in that** the first structure (164) includes a plurality of rotary latches (172) provided on the first edge (168) and the second edge (170).

2. The engine of claim 1 wherein the second structure (166) is a U-shaped structure having a third edge (174) and a fourth edge (176) extending along a length of the second structure (166).

3. The engine of claim 2 wherein the third edge (174) and the fourth edge (176) are bent to form an arcuate profile (178).

4. The engine of claim 3 wherein the second structure (166) couples to the first structure (164) when the plurality of rotary latches (172) of the first structure (164) is received within the arcuate profile (178) of the second structure (166).

5. The engine of claim 1 wherein the first structure (164) and the second structure (166) are made of sheet metal.

6. The engine of claim 4 wherein the first fuel injection unit (142) includes a first flange (156) and the second fuel inj ectionunit (144) include a second flange (156).

7. The engine of claim 6 wherein coupling the plurality of rotary latches (172) with the arcuate profile (178) force-fits the cover assembly (134) on to the first flange (156) and the second flange (156) of the first fuel injection unit (142) and the second fuel injection unit (144) respectively.

## Patentansprüche

1. Kraftmaschine (100) mit einem Kraftstoffeinspritzsystem (128), das dafür ausgelegt ist, Kraftstoff in eine Vielzahl von Brennkammern (114) einzuspritzen, wobei das Kraftstoffeinspritzsystem (128) eine erste Kraftstoffeinspritzeinheit (142) und eine zweite Kraftstoffeinspritzeinheit (144) umfasst und die Kraftmaschine (100) Folgendes umfasst:
eine Kraftstoffrohranordnung (132) mit mindestens einer Kraftstoffrohrleitung (160), die mit der ersten Kraftstoffeinspritzeinheit (142) und der zweiten Kraftstoffeinspritzeinheit (144) fluidtechnisch gekoppelt ist; und
eine Abdeckbaugruppe (134), umfassend:
eine U-förmige erste Struktur (164), die eine erste Kante (168) und eine zweiten Kante (170) aufweist, welche sich entlang einer Länge der ersten Struktur (164) erstrecken, und die dafür ausgelegt ist, auf der Kraftstoffrohranordnung (132) platziert zu werden und sich entlang eines Abschnitts der Länge der Kraftstoffrohranordnung (132) zu erstrecken, wobei die erste Struktur (164) dafür ausgelegt ist, den Abschnitt der Länge der Kraftstoffrohranordnung (132) teilweise einzukapseln; und
eine zweite Struktur (166), die sich entlang des Abschnitts der Länge der Kraftstoffrohranordnung (132) erstreckt und dafür ausgelegt ist, mit der ersten Struktur (164) gekoppelt zu werden, derart, dass die erste Struktur (164) und die zweite Struktur (166) den Abschnitt der Länge der Kraftstoffrohranordnung (132) einkapseln,
**dadurch gekennzeichnet, dass** die erste Struktur (164) eine Vielzahl von Drehriegeln (172) einschließt, die an der ersten Kante (168) und der zweiten Kante (170) bereitgestellt sind.

2. Kraftmaschine nach Anspruch 1, wobei die zweite Struktur (166) eine U-förmige Struktur ist, die eine dritte Kante (174) und eine vierte Kante (176) aufweist, die sich entlang einer Länge der zweiten Struktur (166) erstrecken.

3. Kraftmaschine nach Anspruch 2, wobei die dritte Kante (174) und die vierte Kante (176) gebogen sind, um ein bogenförmiges Profil (178) zu bilden.

4. Kraftmaschine nach Anspruch 3, wobei die zweite Struktur (166) mit der ersten Struktur (164) koppelt, wenn die Vielzahl von Drehriegeln (172) der ersten Struktur (164) innerhalb des bogenförmigen Profils (178) der zweiten Struktur (166) aufgenommen wird.

5. Kraftmaschine nach Anspruch 1, wobei die erste Struktur (164) und die zweite Struktur (166) aus Blech hergestellt sind.

6. Kraftmaschine nach Anspruch 4, wobei die erste Kraftstoffeinspritzeinheit (142) einen ersten Flansch (156) einschließt und die zweite Kraftstoffeinspritzeinheit (144) einen zweiten Flansch (156) einschließt.

7. Kraftmaschine nach Anspruch 6, wobei das Koppeln der Vielzahl von Drehriegeln (172) mit dem bogenförmigen Profil (178) einen Presssitz der Abdeckbaugruppe (134) auf dem ersten Flansch (156) und dem zweiten Flansch (156) der ersten Kraftstoffeinspritzeinheit (142) bzw. der zweiten Kraftstoffeinspritzeinheit (144) bewirkt.

## Revendications

1. Moteur (100) ayant un système d'injection de carburant (128) configuré pour injecter du carburant dans une pluralité de chambres de combustion (114), dans lequel le système d'injection de carburant (128) comprend une première unité d'injection de carburant (142) et une deuxième unité d'injection de carburant (144), le moteur (100) comprenant :
un ensemble de tuyau de carburant (132) ayant au moins un tuyau de carburant (160) couplé de manière fluidique à la première unité d'injection de carburant (142) et à la deuxième unité d'injection de carburant (144) ; et
un ensemble de couvercle (134) comprenant :
une première structure en forme de U (164) ayant un premier bord (168) et un deuxième bord (170) s'étendant le long d'une longueur de la première structure (164) configuré pour être mis en place sur l'ensemble de tuyau de carburant (132) et s'étendant le long d'une partie d'une longueur de l'ensemble (132) de tuyau d'alimentation en carburant, la première structure (164) configurée pour encapsuler partiellement la partie de la longueur de l'ensemble de tuyau de carburant (132) ; et
une deuxième structure (166), s'étendant le long de la partie de la longueur de l'ensemble de tuyau de carburant (132) et configurée pour être couplée à la première structure (164) de sorte que la première structure (164) et la deuxième structure (166) encapsulent la partie de la longueur de l'ensemble de tuyau de carburant (132).
**caractérisé en ce que** la première structure (164) comprend une pluralité de verrous rotatifs (172) prévus sur le premier bord (168) et le deuxième bord (170).

2. Moteur selon la revendication 1, dans lequel la deuxième structure (166) est une structure en forme de U ayant un troisième bord (174) et un quatrième bord (176) s'étendant le long d'une longueur de la deuxième structure (166).

3. Moteur selon la revendication 2, dans lequel le troisième bord (174) et le quatrième bord (176) sont pliés pour former un profil arqué (178).

4. Moteur selon la revendication 3, dans lequel la deuxième structure (166) est couplée à la première structure (164) lorsque la pluralité de verrous rotatifs (172) de la première structure (164) est reçue à l'intérieur du profil arqué (178) de la deuxième structure (166).

5. Moteur selon la revendication 1, dans lequel la première structure (164) et la deuxième structure (166) sont réalisées en tôle.

6. Moteur selon la revendication 4, dans lequel la première unité d'injection de carburant (142) comprend une première bride (156) et la deuxième unité d'injection de carburant (144) comprend une deuxième bride (156).

7. Moteur selon la revendication 6, dans lequel le couplage de la pluralité de verrous rotatifs (172) avec le profil arqué (178) ajuste l'ensemble couvercle (134) sur la première bride (156) et la deuxième bride (156) de la première unité d'injection de carburant (142) et de la deuxième unité d'injection de carburant (144) respectivement.
